# EUROPÄISCHE PATENTANMELDUNG

(11) **EP 0 942 558 A2**
(43) Veröffentlichungstag der Anmeldung: **15.09.1999**
(21) Anmeldenummer: 99104977.6
(22) Anmeldetag: 12.03.1999
(51) Int. Cl.: H04L 12/56, H04Q 11/04

(54) **Vermittlungseinrichtung für ein Kommunikationsnetz**

(30) Priorität: 13.03.1998 DE 19811003
(71) Anmelder: SIEMENS AKTIENGESELLSCHAFT, 80333 München (DE)
(72) Erfinder: Günther, Wolfgang, 81479 München (DE); Burghardt, Norbert, 84189 Wurmsham (DE)

(57) **Zusammenfassung**

Vermittlungseinrichtung für Kommunikationsnetze, insbesondere für ATM-Breitband-Kommunikationsnetze, wobei die Vermittlungseinrichtung eine programmgesteuerte Einrichtung ist und Kommunikationsverbindungen mit Hilfe eines vermittlungstechnischen Prozesses auf- bzw. abgebaut werden, welcher nach dem Prinzip der objektorientierten Programmierung abläuft. Zur Realisierung bestimmter vermittlungstechnischer Funktionen werden eine Mehrzahl von verschiedenen Objekten getrennt für die rufende Teilnehmerseite sowie für die gerufene Teilnehmerseite aufgebaut. Zur Verwaltung von Mehrfachverbindungsrufen (Multiconnection Calls) wird vorgeschlagen, auf derjenigen Teilnehmerseite, von der ein Anreiz vorliegt, ein Leitungs-Zugriffssteuerungsobjekt (LACA) zur Verarbeitung einer die entsprechende Nutzverbindung bezeichnenden Signalisierungsnachricht, ein einrichtungsinterne Abläufe steuerndes Ruf/Dienstesteuerungsobjekt (CSCA) und ein die entsprechende Nutzverbindung steuerndes Nutzverbindungssteuerungsobjekt (COC) zu instanziieren, während auf der anderen Teilnehmerseite lediglich ein weiteres Leitungs-Zugriffssteuerungsobjekt (LACB) und ein weiteres Ruf-/Dienstesteuerungsobjekt (CSCB) aufgebaut werden.

## Beschreibung

Die vorliegende Erfindung betrifft eine Vermittlungseinrichtung für ein Kommunikationsnetz nach dem Oberbegriff des Anspruches 1. Insbesondere betrifft die vorliegende Erfindung eine Vermittlungseinrichtung zum Steuern des Auf- und Abbaus von Kommunikationsverbindungen in einem ATM-Breitband-Kommunikationsnetz (Asynchronous Transfer Mode) wobei die Vermittlungseinrichtung Mehrfachverbindungsrufe (Multiconnection Calls, MCC) für multimediale Anwendungen verarbeiten kann.

Eine Vermittlungseinrichtung nach dem Oberbegriff des Anspruches 1 ist beispielsweise aus der DE 44 15 172 C1 der Anmelderin bekannt. In dieser Druckschrift wird eine programmgesteuerte Breitband-ISDN-Kommunikationseinrichtung beschrieben, wobei ein nach den Prinzipien der objektorientierten Programmierung erstellter Programmodul zur Behandlung von Wählverbindungen vorgesehen ist. Nach dem Prinzip der objektorientierten Programmierung sind in diesem Programmodul Klassen oder Strukturelemente definiert, von denen für die Abwicklung bestimmter vermittlungstechnischer Funktionen Objekte instanziiert oder aufgebaut werden können. Diese Objekte stellen nach außen hin ein abgeschlossenes Gebilde dar und bestehen aus einer Einheit von Daten und Programmprozeduren, die auch als Methoden bezeichnet werden.

Allgemeine Informationen bezüglich der objektorientierten Programmierung und deren Regeln können beispielsweise Frauenheim B. et al: "Objektorientierte Programmierung" (C++ Programmierkurs, Teil I - Teil IV, Elektronik 1990, Hefte 22 - 25) entnommen werden.

Die in der zuvor genannten Patentschrift DE 44 15 172 C1 vorgeschlagene Vermittlungseinrichtung wird gemäß einem in dieser Vermittlungseinrichtung nach dem Prinzip der objektorientierten Programmierung ablaufenden vermittlungstechnischen Prozeß betrieben, wobei eine Mehrzahl von objektbezogenen Klassen oder Strukturelementen zur Implementierung unterschiedlicher vermittlungstechnischer Funktionen vorgesehen sind, die jeweils für eine Mehrzahl von vermittlungstechnischen Vorgängen verfügbar sind. Von den zuvor genannten Klassen bzw. Strukturelementen werden für die Realisierung festgelegter vermittlungstechnischer Funktionen bestimmte Objekte aufgebaut bzw. instanziiert, die durch Methodenaufrufe miteinander kommunizieren. Um diese Anzahl von Methodenaufrufen beim Auf- und Abbau von Wählverbindungen in der Vermittlungseinrichtung zu reduzieren, wird in dieser Druckschrift vorgeschlagen, die nach dem OSI-Schichtenmodell (Open System Interconnection) festgelegte Vermittlungsschicht für die Teilnehmersignalisierung in eine Mehrzahl von Unterschichten zu unterteilen, wobei jede dieser Unterschichten durch mindestens eine Klasse bzw. mindestens ein Strukturelement mit entsprechenden Objekten realisiert ist. Dabei ist sowohl die rufende Teilnehmerseite als auch die gerufene Teilnehmerseite durch mindestens ein separates Objekt repräsentiert, und die Objekte ein und derselben Teilnehmerseite kommunizieren miteinander über quasi asynchrone Methodenaufrufe, während die Objekte unterschiedlicher Teilnehmerseiten über asynchrone interne Anreize direkt miteinander kommunizieren.

Als Unterschichten für die Vermittlungsschicht nach dem OSI-Schichtenmodell werden in der DE 44 15 172 C1 insbesondere eine für die Steuerung der Teilnehmer-Signalisierungsprotokolle dienende Leitungs-Zugriffssteuerung (Line Access Control, LAC), eine einrichtungsinterne Abläufe steuernde Ruf/Dienstesteuerung (Call Service Control, CSC), eine Zustandsänderungen der Sicherungsschicht des OSI-Schichtenmodells bearbeitende Transportsteuerung (Transport Control, TRC) sowie eine als Bindeglied der zuvor genannten Unterschichten fungierende Verbindungssteuerung (Association Control, ASC) vorgeschlagen. Jede dieser Unterschichten ist durch eine Klassenhierarchie realisiert, wobei innerhalb jeder Klasse der jeweiligen Klassenhierarchie die für die Teilnehmersignalisierung festgelegte rufende Teilnehmerseite und gerufene Teilnehmerseite durch mindestens ein gesondertes Objekt repräsentiert ist.

Die zuvor beschriebene Kommunikations- bzw. Vermittlungseinrichtung wird insbesondere in ATM-Kommunikationsnetzen (Asynchronous Transfer Mode) eingesetzt. Bei dem sogenannten ATM-Prinzip werden die zwischen zwei Teilnehmern zu übermittelnden Informationen in Form von Zellen mit einem standardisierten Format übertragen. Um den Datentransport über das Kommunikationsnetz in Form der zuvor genannten Zellen zu erleichtern, werden "virtuelle Verbindungen" verwendet. Bei einer virtuellen Verbindung wird der Verbindungspfad zu einem gewünschten angerufenen Teilnehmer lediglich einmal am Beginn festgelegt. Diesem Verbindungspfad wird eine jeweils zwischen zwei benachbarten Netzknoten gültige Kennzahl zugewiesen. Diese Kennzahl wird jeweils in einer Kopfeinheit (Header) der einzelnen Zellen vermerkt. Die Vermittlungseinrichtungen des Kommunikationsnetzes brauchen auf diese Weise bei Eintreffen der Zellen der gewünschten Verbindung nicht mehr den Zielpfad neu auszuarbeiten, sondern ermitteln durch Auswertung der Kennzahl der Zellen unmittelbar das anzusteuernde Ziel. Nachdem die Kommunikationsverbindung beendet worden ist, wird die virtuelle Verbindung wieder abgebaut, indem die vergebenen Kennzahlen in den einzelnen Netzknoten gelöscht werden.

Das zuvor genannte ATM-Prinzip mit dem Konzept der virtuellen Verbindung unterstützt in hohem Maße multimediale Anwendungen, bei denen für unterschiedliche Informationsarten bzw. Medien, (wie z.B. Sprach-, Festbild-, Bewegtbild- oder Dateninformationen) eine adäquate virtuelle Verbindung zur Verfügung gestellt werden kann.

Im Rahmen der ITU-T-Empfehlung Q.298x werden Punkt-zu-Punkt Mehrfachverbindungsrufe (Point-to-Point multiconnection calls, MCC) behandelt, wobei der Aufbau derartiger multimedialer Anwendungen mit Hilfe von geeigneten Signalisierungsprozeduren, die von den Endgeräten des Kommunikationsnetzes angereizt werden können, unterstützt wird. Diese Signalisierungsprozeduren für Mehrfachverbindungsrufe müssen jedoch auch auf der Seite der Vermittlungseinrichtung abgewickelt und dabei die von den einzelnen Endgeräten des Kommunikationsnetzes angeforderten Ressourcen für die virtuellen Verbindungen bereitgestellt werden.

Eine Realisierung für die Verarbeitung von Mehrfachverbindungsrufen (Multiconnection Calls) in Vermittlungseinrichtungen, insbesondere in ATM-Vermittlungseinrichtungen, ist jedoch noch nicht bekannt. Der Aufbau von multimedialen Anwendungen wird bisher ohne Unterstützung durch die jeweilige Vermittlungseinrichtung allein von dem rufenden Endgerät behandelt.

Der vorliegenden Erfindung liegt daher die Aufgabe zugrunde, eine Vermittlungseinrichtung der eingangs beschriebenen Art derart auszugestalten, daß Mehrfachverbindungsrufe (Multiconnection Calls) in der Vermittlungseinrichtung realisiert und verarbeitet werden können.

Diese Aufgabe wird gemäß der vorliegenden Erfindung durch eine Vermittlungseinrichtung mit den im Anspruch 1 angegebenen Merkmalen gelöst. Die Unteransprüche beschreiben vorteilhafte Ausgestaltungen und bevorzugte Ausführungsbeispiele der vorliegenden Erfindung, welche ihrerseits den Auf- und Abbau von Mehrfachverbindungen weiter erleichtern.

Mit der vorliegenden Erfindung wird eine Möglichkeit zur Realisierung von Mehrfachverbindungsrufen (Multiconnection Calls) in Vermittlungseinrichtungen geschaffen. Insbesondere kann die vorliegende Erfindung auf Vermittlungseinrichtungen in ATM-Kommunikationsnetzen angewendet werden.

Die erfindungsgemäß vorgeschlagene Vermittlungseinrichtung ist derart ausgestaltet, daß die in der eingangs beschriebenen Patentschrift DE 44 15 172 C1 vorgeschlagenen objektorientierte Programmstruktur wiederverwendet werden kann. Insbesondere bleiben auch die vorhandenen Rufauf- und Rufabbauprozeduren, wie sie durch die ITU-T-Empfehlung Q.2931 und durch die ATM-Forum-UNI-Spezifikation V3.1 vorgegeben sind, durch die von der vorliegenden Erfindung vorgeschlagene Behandlung von Mehrfachverbindungsrufen unberührt. Die mit ATM-Vermittlungseinrichtungen erzielbare hohe Laufzeiteffizienz, d.h. der bekannt hohe Datendurchsatz von ATM-Vermittlungseinrichtungen, wird durch die erfindungsgemäß vorgeschlagene Behandlung von Mehrfachverbindungsrufen nicht bzw. nur unwesentlich beeinflußt. Die Erfindung wird nachfolgend anhand bevorzugter Ausführungsbeispiele unter Bezugnahme auf die Zeichnung näher erläutert.
Figur 1 - 3 zeigen den Ablauf des Aufbaus von Nutzverbindungen für einen Mehrfachverbindungsruf (Multiconnection Call) zu verschiedenen Zeitpunkten anhand der Kommunikation von Objekten einer objektorientierten Programmstruktur, welche gemäß der vorliegenden Erfindung bevorzugt eingesetzt wird,
Figur 4 zeigt beispielhaft die Datenstruktur, welche gemäß einem Ausführungsbeispiels der vorliegenden Erfindung zur Verwaltung von Mehrfachverbindungsrufen eingesetzt wird,
Figur 5 zeigt den bekannten Aufbau des OSI-Schichtenmodells, und
Figur 6 zeigt eine Unterteilung der Vermittlungsschicht des in Figur 5 dargestellten OSI-Schichtenmodells, welche bevorzugt gemäß der vorliegenden Erfindung verwendet wird.

Wie bereits erläutert worden ist, baut die vorliegende Erfindung auf der in dem deutschen Patent DE 44 15 172 C1 beschriebenen Vermittlungseinrichtung auf. Die erfindungsgemäße Vermittlungseinrichtung ist demnach eine programmgesteuerte Einrichtung zum Auf- bzw. Abbau von Kommunikationsverbindungen in einem Kommunikationsnetz, und wobei der Auf- und Abbau der Kommunikationsverbindungen mit Hilfe eines vermittlungstechnischen Prozesses einer Steuereinrichtung gesteuert wird, wobei der vermittlungstechnische Prozeß nach den Prinzipien der objektorientierten Programmierung abläuft. Wie in der DE 44 15 172 C1 beschrieben, sind auch bei der erfindungsgemäßen Vermittlungseinrichtung bezüglich des in der Steuereinrichtung der Vermittlungseinrichtung ablaufenden vermittlungstechnischen Prozesses mehrere objektbezogene Klassen bzw. Strukturelemente zur Implementierung unterschiedlicher vermittlungstechnischer Funktionen vorgesehen, die jeweils für eine Mehrzahl von vermittlungstechnischen Vorgängen verfügbar sind. Für die tatsächliche Realisierung bestimmter vermittlungstechnischer Funktionen werden bestimmte Objekte aufgebaut bzw. instanziiert, die durch Methodenaufrufe miteinander kommunizieren. Diese Objekte werden sowohl auf der Teilnehmerseite eines rufenden Teilnehmerendgeräts als auch auf der Teilnehmerseite eines gerufenen Teilnehmerendgeräts aufgebaut.

Von der vorliegenden Erfindung ist insbesondere die Vermittlungsschicht des bekannten OSI-7-Schichtenmodells betroffen. Bei dem siebenschichtigen OSI-Schichtenmodell handelt es sich um eine von OSI (Open System Interconnection) entwickelte Definition für den Aufbau von Netzwerken, ausgehend von der physikalischen (Medium-) Ebene bis zum Anwendungsprogramm. Das OSI-Schichtenmodell definiert sieben für die Kommunikation offener Systeme notwendige Prozesse. Jede Schicht des OSI-Schichtenmodells baut auf den Diensten der darunterliegenden Schicht auf und bietet ihrerseits der darüberliegenden Schicht ihre Dienste an.

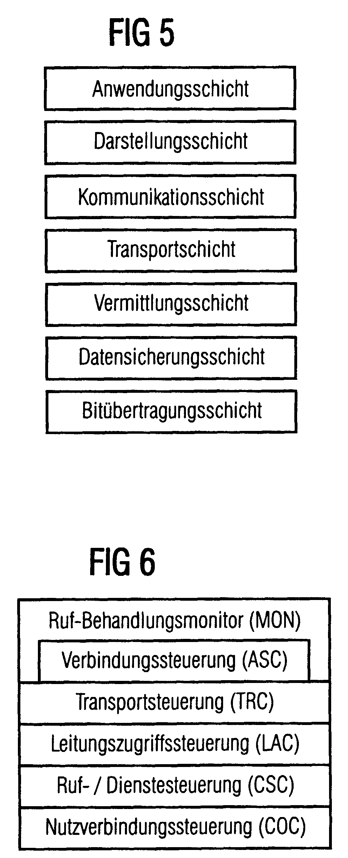

Der allgemein bekannte Aufbau des OSI-Schichtenmodells ist in Figur 5 dargestellt. Die unterste Schicht ist die Bit-Übertragungsschicht (Physical Link Layer), welche die physikalischen Eigenschaften der elektrischen und mechanischen Netzwerkverbindungen (wie z.B. das Übertragungsmedium, das verwendete Modulationsverfahren, die Übertragungsart usw.) definiert. Die nächsthöhere Schicht ist die Datensicherungsschicht (Data Link Layer), welche die Verbindungen zwischen den Teilnehmern des Kommunikationsnetzes herstellt und die fehlerfreie Übertragung der Datenpakete sicherstellt. Die Vermittlungsschicht (Network Layer) ist für den Auf- und Abbau von Netzverbindungen sowie das Routing des Datenaustausches verantwortlich und steuert demnach den Auf- und Abbau von logischen Verbindungen zwischen einem rufenden Teilnehmer und einem gerufenen Teilnehmer. Die der Vermittlungsschicht übergeordnete Transportschicht (Transport Layer) übernimmt die Befehle der übergeordneten Schichten und stellt eine fehlerfreie Übertragung über die unteren Schichten sicher. Die Kommunikationsschicht (Session Layer) benützt die Transportschicht für die Adressierung und Sicherung von zu übertragenden Daten sowie für den Wiederaufbau einer abgebrochenen Verbindung. Die zweithöchste Schicht ist die Darstellungsschicht (Presentation Layer), welche den Datenaustausch zwischen zwei Netzknoten vermittelt und zur Konvertierung von Übertragungscodes oder zur Anpassung von Bildschirm- und Druckerformaten dient. Die höchste Schicht des OSI-Schichtenmodells ist die Anwendungsschicht (Application Layer), welche die Kommunikationsschnittstelle für Anwenderprogramme darstellt.

Die mit Hilfe der vorliegenden Erfindung realisierte Behandlung von Mehrfachverbindungsrufen (Multiconnection Calls, MCC) betrifft insbesondere die in Figur 5 gezeigte VermittlungsSchicht des OSI-Schichtenmodells. Die Vermittlungsschicht des OSI-Schichtenmodells wird bei der Vermittlungseinrichtung der vorliegenden Erfindung insbesondere mit Hilfe einer Steuerungslogik realisiert, welche die Vermittlungsschicht in mehrere Unterschichten unterteilt. Die Vermittlungsschicht des OSI-Schichtenmodells kann insbesondere wie in Figur 6 gezeigt aufgebaut sein. Gemäß Fig. 6 sind als Unterschichten eine Transportsteuerung (Transport Control, TRC) vorgesehen, welche den sogenannten Dienst-Zugriffspunkt (Service Access Point) für Zustandsänderungen der in Figur 5 gezeigten Datensicherungsschicht des OSI-Schichtenmodells behandelt, d.h. diese Transportsteuerung steuert die Kommunikation an der Schnittstelle zwischen der Vermittlungsschicht und der Datensicherungsschicht des in Figur 5 gezeigten OSI-Schichtenmodells. Des weiteren ist als Unterschicht eine Leitungszugriffssteuerung (Line Access Control, LAC) für die Steuerung des für eine gewünschte Kommunikationsverbindung festgelegten Teilnehmer-Signalisierungsprotokolls vorgesehen. Derartige Teilnehmersignalisierungsprotokolle sind beispielsweise für ATM-Verbindungen durch die ITU-T-Empfehlung Q.2931 oder durch die ATM-Forum UNI Spezifikation V3.1 für die Vermittlungsschicht des OSI-Schichtenmodells festgelegt. Des weiteren ist eine Ruf/Dienstesteuerung (Call/Service Control, CSC) vorgesehen, welche interne Abläufe der entsprechenden Vermittlungseinrichtung steuert. Als weitere Unterschicht ist eine Nutzverbindungssteuerung (Connection Control, COC) vorgesehen, welche den Auf- und Abbau der Nutzverbindungen innerhalb der entsprechenden Vermittlungseinrichtung steuert.

Jede der zuvor genannten Unterschichten TRC, LAC, CSC und COC ist durch eine Klassenhierarchie realisiert, wobei in jeder Klasse der jeweiligen Klassenhierarchie die für die entsprechende Teilnehmersignalisierung festgelegte rufende Teilnehmerseite und gerufene Teilnehmerseite durch mindestens ein gesondertes Objekt repräsentiert ist. Wie in der DE 44 15 172 C1 vorgeschlagen, können dabei die Objekte ein und derselben Teilnehmerseite miteinander über quasi asynchrone Methodenaufrufe kommunizieren, wobei mit dem jeweiligen Methodenaufruf das jeweilige Zielobjekt durch eine physikalische Objektadresse (Speicheradresse) bezeichnet wird. Die auf unterschiedlichen Teilnehmerseiten (rufende und gerufene Teilnehmerseite) angeordneten Objekte kommunizieren dagegen über interne Anreize (Reports), wobei das jeweilige Zielobjekt durch eine logische Objektadresse adressiert ist.

Als Bindeglied für die in Figur 7 gezeigten Unterschichten der Vermittlungsschicht des OSI-Schichtenmodells dient eine Verbindungssteuerung (Association Control, ASC), welche in Form eines Signalverteilers in einem Ruf-Behandlungsmonitor (Call Processing Monitor, MON) eingebettet ist. Der Ruf-Behandlungsmonitor hat allgemein die Aufgabe, externe Ereignisinformationen und Informationen bezüglich des Ablaufs von Zeitgliedern, auf welche innerhalb des jeweiligen vermittlungstechnischen Prozesses zu reagieren ist, zu empfangen. Derartige externe Ereignisinformationen können dabei Zustandsänderungsanzeigen der Datensicherungsschicht oder Signalisierungsnachrichten (Q.2931-Nachrichten) der einzelnen Teilnehmer gemäß dem in Figur 5 gezeigten OSI-Schichtenmodell sein. Der Ruf-Behandlungsmonitor wandelt die jeweilige externe Ereignisinformation in einen internen Ereigniscode um und ermittelt den jeweils vorliegenden Ereignistyp. Mit Hilfe der in Figur 7 gezeigten Verbindungssteuerung wird die Ereignisinformation des Ruf-Behandlungsmonitors in einen internen Ereignisbezeichner umgewandelt, wobei die Verbindungssteuerung die in der Ereignisinformation vorhandene logische Referenz in eine physikalische Objektreferenz umwandelt, um auf diese Weise das gewünschte Zielobjekt zu adressieren und diesem die jeweilige Ereignisinformation zur Bearbeitung zuzustellen. Auf diese Weise wird von der Verbindungssteuerung ASC bei Vorliegen einer Signalisierungsnachricht das zuständige Zielobjekt der Leitungs-Zugriffssteuerung LAC ermittelt und die jeweilige Ereignisinformation diesem LAC-Objekt zugeführt. Für einen neu zu bearbeitenden Ruf instanziiert die Verbindungssteuerung ASC gegebenenfalls vorher ein neues LAC-Objekt.

Für bestimmte interne Steuerungsvorgänge innerhalb der Vermittlungseinrichtung, wie z.B. Berechtigungsprüfungen, Pfadsuchen zur Ermittlung eines Zielteilnehmers, Belegung von internen Ressourcen, Verwaltung und Vergabe von virtuellen Kanalnummern für über die Vermittlungseinrichtung verlaufende virtuelle Verbindungen, Kapazitätsverwaltung der einzelnen Verbindungswege usw., greift die Leitungszugriffssteuerung LAC direkt über physikalische Objektadressen auf die Ruf/Dienstesteuerung CSC derselben Teilnehmerseite zu, d.h. es findet ein Methodenaufruf zwischen einem LAC-Objekt und einem CSC-Objekt statt. Darüber hinaus werden Signalisierungsnachrichten, welche für beide Teilnehmerseiten relevant sind, durch das jeweilige LAC-Objekt an ein LAC-Partnerobjekt auf der anderen Teilnehmerseite weitergeleitet, wobei der Informationsaustausch zwischen diesen beiden LAC-Objekten - wie bereits zuvor erläutert worden ist - vorzugsweise über interne Anreize (Reports) erfolgt. Bei diesen internen Anreizen kann es sich beispielsweise um eine Anforderung bzw. Quittung für das Durchschalten einer Nutzverbindung, eine Anforderung bzw. Quittung für das Auslösen einer Nutzverbindung, einen Rufabbruch oder um Informationen bezüglich einer erforderlichen Synchronisation der Ruf-/Dienstesteuerungen CSC der beiden Teilnehmerseiten bei Rufabbrüchen für die Freigabe logischer Ressourcen handeln. Während die Verwendung der Schichten TRC, LAC und CSC bereits aus der DE 44 15 172 C1 bekannt ist, wird gemäß der vorliegenden Erfindung eine zusätzliche Unterschicht der in Figur 5 gezeigten Vermittlungsschicht des OSI-Schichtenmodells verwendet, welche für den Auf- und Abbau von Nutzverbindungen innerhalb der entsprechenden Vermittlungseinrichtung verantwortlich ist. Diese Nutzverbindungssteuerungsschicht (Connection Control, COC) instanziiert bei Vorliegen eines Mehrfachverbindungsrufs (Multiconnection Call, MCC) für jede Nutzverbindung dieser Mehrfachverbindung ein entsprechendes COC-Objekt auf derjenigen Teilnehmerseite, von der ein Anreiz für den Aufbau der entsprechenden Nutzverbindung vorliegt. Das heißt der Aufbau einer Nutzverbindung wird immer von demjenigen CSC-Objekt veranlaßt, dessen Endeinrichtung bzw. Teilnehmerendgerät den Verbindungsaufbau veranlaßt hat.

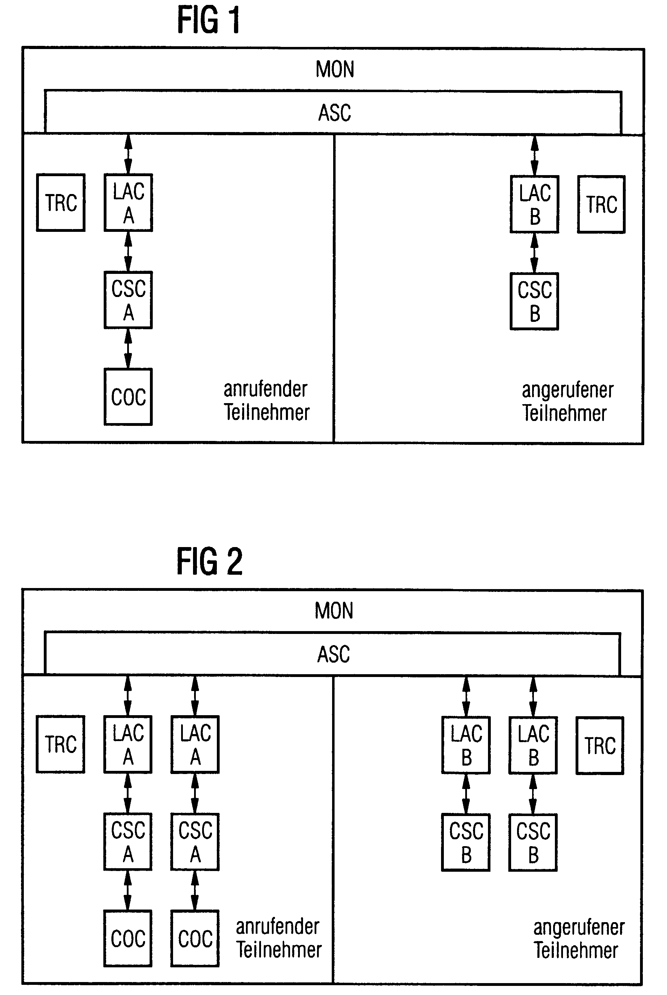

Anhand der Figuren 1 - 3 soll die Realisierung von Mehrfachverbindungsrufen gemäß der vorliegenden Erfindung anhand einer beispielhaften Mehrfachverbindung mit drei Nutzverbindungen erläutert werden, wobei zur Behandlung des Mehrfachverbindungsrufs die zuvor erläuterten Unterschichten der Vermittlungsschicht des OSI-Schichtenmodells sowie die entsprechenden Objekte verwendet werden.

Nach dem Hochlauf der Vermittlungseinrichtung, welche insbesondere als ATM-Vermittlungseinrichtung ausgebildet ist, sind bereits Objekte des Ruf-Behandlungsmonitors, d.h. MON-Objekte, sowie Objekte der Verbindungssteuerung, d.h. ASC-Objekte, vorhanden, bevor der eigentliche Vermittlungsbetrieb aufgenommen worden ist. Nach dem Aufbau der Signalisierungsverbindung der in Figur 5 gezeigten Datensicherungsschicht des OSI-Schichtenmodells, welche durch das Endgerät eines rufenden Teilnehmers veranlaßt wird, werden Objekte der Transportsteuerung, d.h. TRC-Objekte, instanziiert, d.h. aufgebaut. Wie in Figur 1 gezeigt ist, sind diese TRC-Objekte sowohl auf der Teilnehmerseite eines rufenden Teilnehmers als auch auf der Teilnehmerseite eines gerufenen Teilnehmers vorhanden.

Als nächster Schritt wird infolge des Vorliegens eines Mehrfachverbindungsrufs der Aufbau einer ersten Nutzverbindung für diese Mehrfachverbindung durch das Endgerät des rufenden Teilnehmers veranlaßt. Beim Aufbau dieser ersten Nutzverbindung werden im Programmsystem der Vermittlungseinrichtung für den rufenden Teilnehmer ein CSC-, ein LAC- und ein COC-Objekt aufgebaut, während für den gerufenen Teilnehmer lediglich ein LAC- und ein CSC-Objekt aufgebaut werden. Das auf der Teilnehmerseite des rufenden Teilnehmers instanziierte, d.h. aufgebaute COC-Objekt repräsentiert die entsprechende Nutzverbindung und hat zur Aufgabe, den Auf- und Abbau dieser Nutzverbindung innerhalb der Vermittlungseinrichtung zu steuern. Der Aufbau der Nutzverbindung wird immer von demjenigen CSC-Objekt veranlaßt, dessen Endgerät den Verbindungsaufbau veranlaßt hat. In Figur 1 sowie den nachfolgenden Figuren sind zur Vereinfachung der Unterscheidung dieses CSC-Objekt sowie das zugehörige LAC-Objekt der die Nutzverbindung anreizenden Teilnehmerseite durch ein zusätzliches "A" markiert. Die LAC-/CSC-Objekte der "passiven" Teilnehmerseite sind hingegen durch ein "B" markiert.

Sobald die erste Nutzverbindung der gewünschten Mehrfachverbindung aufgebaut worden ist und den Zustand "aktiv" eingenommen hat, kann eine zweite Nutzverbindung für die gewünschte Mehrfachverbindung aufgebaut werden. Zu diesem Zweck kann der Aufbau dieser zweiten Nutzverbindung sowohl von dem rufenden Teilnehmer als auch von dem gerufenen Teilnehmer angereizt werden. Im vorliegenden Beispiel sei angenommen, daß der Aufbau der zweiten Nutzverbindung von der rufenden Teilnehmerseite ausgeht, so daß in Übereinstimmung mit Figur 2 wiederum auf der rufenden Teilnehmerseite ein LAC-Objekt des Typs "A", ein CSC-Objekt des Typs "A" sowie ein für die Steuerung der zweiten Nutzverbindung verantwortliches COC-Objekt aufgebaut werden, während auf der Teilnehmerseite des gerufenen Teilnehmers lediglich ein LAC-Objekt sowie ein CSC-Objekt jeweils des Typs "B" aufgebaut werden.

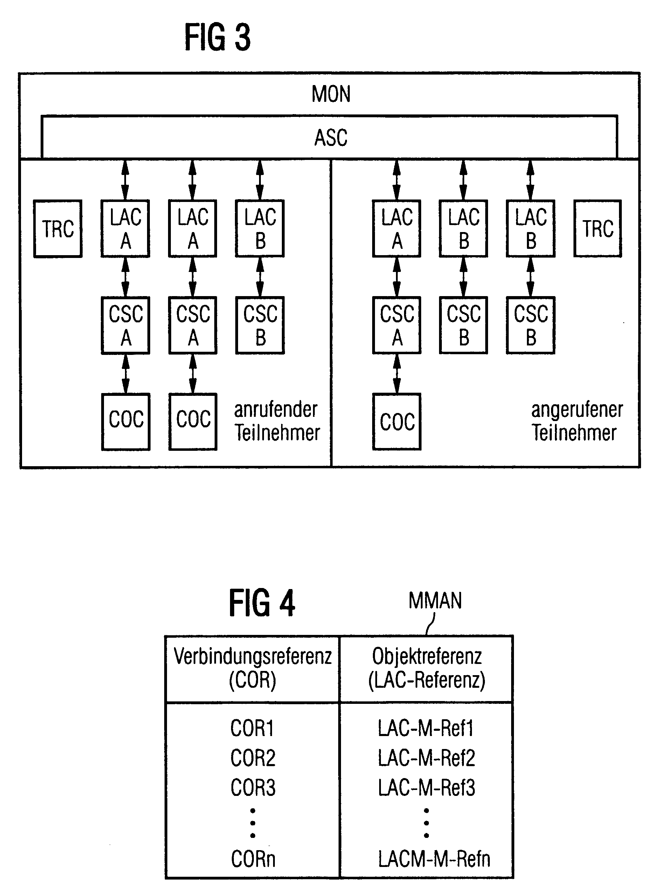

Für den Aufbau der dritten Nutzverbindung der gewünschten Mehrfachverbindung sei nunmehr angenommen, daß der gerufene Teilnehmer den Aufbau dieser dritten Nutzverbindung veranlaßt. Da in diesem Fall für den Aufbau der dritten Nutzverbindung der gerufene Teilnehmer den aktiven Part spielt, d.h. den Aufbau der dritten Nutzverbindung anreizt, werden nunmehr auf der Teilnehmerseite des gerufenen Teilnehmers LAC- und CSC-Objekte des Typs "A" sowie ein COC-Objekt aufgebaut, während auf der Teilnehmerseite des rufenden Teilnehmers für diese dritte Nutzverbindung lediglich ein LAC-Objekt sowie ein CSC-Objekt jeweils des Typs "B" aufgebaut werden. Insgesamt entsteht somit die in Fig. 3 gezeigte objektorientierte Programmstruktur der Vermittlungseinrichtung.

Die genaue Ausprägung von Punkt-zu-Punkt-Mehrfachverbindungsrufen ist derzeit noch umstritten. Im wesentlichen sind hierfür derzeit drei Ansätze bekannt, wobei nachfolgend dargelegt wird, daß die anhand Fig. 1 - 3 erläuterte Vorgehensweise der vorliegenden Erfindung zur Realisierung jedes dieser drei Ansätze geeignet ist.

Gemäß dem ersten Ansatz werden für den Auf- und Abbau von zu einem Mehrfachverbindungsruf gehörenden Verbindungen eigene Nachrichten, z.B. eine Add-Connection- oder Release-Connection-Nachricht, eingeführt, die mit der sogenannten Call-Reference-Information gesendet werden. Diese Call-Reference-Information wird von dem Setup-Datenbestand des rufenden Teilnehmer-Endgeräts vorgegeben und mit der Initialnachricht für den entsprechenden Mehrfachverbindungsruf übermittelt. Bei Abbau dieses Initialrufes werden automatisch alle zu dem Mehrfachverbindungsruf gehörenden Nutzverbindungen durch die Vermittlungseinrichtung abgebaut.

Zur Anwendung der anhand der Fig. 1 - 3 erläuterten Programmstruktur der erfindungsgemäßen Vermittlungseinrichtung auf den zuvor beschriebenen ersten Ansatz wird vorgeschlagen, ein zusätzliches Objekt zur Verwaltung der Zusammengehörigkeit der einzelnen Nutzverbindungen zu einem Mehrfachverbindungsruf (Multiconnection Call, MCC) einzuführen. Dieses zusätzliche Objekt wird nachfolgend durch MMAN (MCC-Verwalter, MCC-Manager) abgekürzt. Zur Realisierung des ersten Ansatzes verwaltet das MMAN-Objekt die Relation zwischen der mit der Initialnachricht übermittelten Call-Reference-Information und den zugehörigen Nutzverbindungen sowie den den einzelnen Nutzverbindungen entsprechenden LAC-Objekten, die für die Bearbeitung der Signalisierungsnachrichten innerhalb der einzelnen Nutzverbindungen zuständig sind. Dabei kann jede einzelne Nutzverbindung durch eine entsprechende Verbindungsreferenz (Connection Reference, COR) identifiziert werden.

Des weiteren ist zur Realisierung des zuvor beschriebenen ersten Ansatzes eine Anpassung des in den Fig. 1 - 3 dargestellten ASC-Objekts erforderlich. Das ASC-Objekt muß die Initialnachricht für den Aufbau einer weiteren Nutzverbindung (Add-Connection-Nachricht) erkennen. Zudem wird vorgeschlagen, daß das ASC-Objekt bei Erkennen einer entsprechenden Initialnachricht für den Aufbau einer weiteren Nutzverbindung eine Variante des zuvor erläuterten LAC-Objekts aufbaut, d.h. instanziiert, welche ausschließlich die neuen Nachrichten verarbeiten kann. Diese Variante des LAC-Objekts wird nachfolgend als LAC-M-Objekt bezeichnet. Zudem ist eine Anpassung desjenigen LAC-Objekts erforderlich, welches für den Initialruf der Mehrfachverbindung zuständig ist. Dieses für den Initialruf zuständige LAC-Objekt muß erkennen, daß es dem Initialruf zugeordnet ist, wobei das für den Initialruf zuständige LAC-Objekt nach dessen Aktivierung anhand der von dem MMAN-Objekt verwalteten Datenrelation die noch vorhandenen LAC-M-Objekte der entsprechenden Mehrfachverbindung ermittelt und auslöst, um die entsprechenden Nutzverbindungen abzubauen. Die von dem MMAN-Objekt verwaltete Datenrelation zur Realisierung des zuvor erläuterten ersten Ansatzes ist beispielhaft in Fig. 4 dargestellt, wobei jede Nutzverbindung der auszuführenden Mehrfachverbindung durch eine Verbindungsreferenz COR1-CORn identifiziert ist, während die den einzelnen Nutzverbindungen 1-n zugewiesenen LAC-Objekte bzw. LAC-M-Objekte durch entsprechende Objektreferenzen LAC-Refl bzw. LAC-M-Ref2-n identifiziert sind.

Gemäß einem zweiten von ITU-T diskutierten Ansatz für die Realisierung von Punkt-zu-Punkt-Mehrfachverbindungsrufen wird vorgeschlagen, im Gegensatz zu dem zuvor erläuterten ersten Ansatz keine zusätzlichen Nachrichten einzuführen, sondern wie bei einem normalen Rufaufbau neue Punkt-zu-Punkt-Verbindungen aufzubauen, welche durch ein (nachfolgend als MCC-Id bezeichnetes) zusätzliches Informationselement als zu einem bestimmten Mehrfachverbindungsruf gehörig identifiziert werden. Wie bei dem ersten Ansatz werden bei Abbau des Initialrufes automatisch alle zu der entsprechenden Mehrfachverbindung gehörenden Nutzverbindungen von der Vermittlungseinrichtung abgebaut.

Zur Realisierung dieses zweiten Ansatzes mit deren anhand der Fig. 1 - 3 erläuterten Programmstruktur der erfindungsgemäßen Vermittlungseinrichtung kann wiederum ein zusätzliches MMAN-Objekt verwendet werden, welches jedoch in diesem Fall die Relation zwischen der MCC-Id des Mehrfachverbindungsrufs und den einzelnen Call-Reference-Informationen der für jede zusätzliche Nutzverbindung neu aufgebauten Rufe verwaltet. Im Gegensatz zu dem ersten Ansatz muß in diesem Fall das bereits bekannte ASC-Objekt nicht verändert werden, da bei diesem Ansatz keine LAC-M-Objekte benötigt werden. Jedoch muß auch in diesem Fall das für den Initialruf zuständige LAC-Objekt erkennen, daß es für den Initialruf zuständig ist und eine entsprechende Eigenschaft aufweisen, um anhand der von dem MMAN-Objekt verwalteten Call-References-Informationen die zu dem entsprechenden Mehrfachverbindungsruf gehörenden LAC-Objekte zu ermitteln und auszulösen.

Gemäß einem dritten Ansatz ist schließlich vorgesehen, wie bei dem zweiten Ansatz keine zusätzlichen Nachrichten zum Auf- und Abbau weiterer Nutzverbindungen einzuführen, wobei jedoch im Gegensatz zu dem zweiten Ansatz der Vermittlungseinrichtung der Zusammenhang der einzelnen Nutzverbindungen nicht mehr bekannt ist. Gemäß dem dritten Ansatz reicht die Vermittlungseinrichtung lediglich ein zusätzliches Informationselement (Correlation Id) von der sendenden zur empfangenden Seite transparent durch, so daß insbesondere das Endgerät auf der gerufenen Teilnehmerseite über die Zusammengehörigkeit der einzelnen Nutzverbindungen informiert ist.

Zur Realisierung dieses dritten Ansatzes mit Hilfe der in den Fig. 1 - 3 dargestellten Programmstruktur der erfindungsgemäßen Vermittlungseinrichtung wird weder ein zusätzliches MMAN-Objekt noch eine Variante des LAC-Objekts für die Behandlung des Initialrufes benötigt. Als einzige zusätzliche Leistung muß das zusätzliche Informationselement, welches den Zusammenhang mit den einzelnen Nutzverbindungen bezeichnet (Correlation Id), über interne Nachrichten von der rufenden Teilnehmerseite zu der gerufenen Teilnehmerseite transparent übermittelt werden.

Bezüglich der Ansätze 1 und 2 ist festzustellen, daß sich hinsichtlich der Realisierung von Mehrfachverbindungsrufen die Laufzeiteffizienz der Vermittlungseinrichtung verglichen mit dem Auf- und Abbau von herkömmlichen Punkt-zu-Punkt-Verbindungen nur unwesentlich verschlechtert, da das LAC-Objekt jeweils feststellen muß, ob es einen Mehrfachverbindungsruf behandeln muß oder nicht. Muß das LAC-Objekt keinen Mehrfachverbindungsruf behandeln, erfolgt die Rufbearbeitung auf bisher bekannte Art und Weise. Beim dritten Ansatz wird durch die in der erfindungsgemäßen Vermittlungseinrichtung realisierte Mehrfachverbindungsruf-Unterstützung verglichen mit der herkömmlichen Rufverarbeitung keinerlei Verlust an Laufzeiteffizienz hervorgerufen.

Mit Hilfe der vorliegenden Erfindung wird eine Realisierung für die Behandlung von Mehrfachverbindungsrufen in Vermittlungseinrichtungen derart vorgeschlagen, daß die beispielsweise bereits aus der Patentschrift DE-44 15 172 C1 bekannte objektorientierte Programmstruktur wieder verwendet werden kann. Insbesondere bleiben auch die vorhandenen Rufauf- und - abbauprozeduren durch die Realisierung der Mehrfachverbindungsrufbehandlung unberührt. Die erfindungsgemäß vorgeschlagene Vermittlungseinrichtung ist zur Realisierung aller derzeit von ITU-T diskutierten Ansätze für die Behandlung von Punkt-zu-Punkt-Mehrfachverbindungsrufen geeignet.

## Patentansprüche

1. Vermittlungseinrichtung für ein Kommunikationsnetz,
mit Steuermitteln (MON, ASC, TRC, LAC, CSC, COC) zum Steuern des Auf- und Abbaus von Kommunikationsverbindungen des Kommunikationsnetzes mit Hilfe eines vermittlungstechnischen Prozesses, welcher nach dem Prinzip der objektorientierten Programmierung abläuft und zur Realisierung bestimmter vermittlungstechnischer Funktionen eine Mehrzahl von verschiedenen Objekten (TRC, LAC, CSC, COC) getrennt für eine rufende Teilnehmerseite und eine gerufene Teilnehmerseite aufbaut,
wobei die für eine Kommunikationsverbindung aufgebauten Objekte ein Leitungs-Zugriffssteuerungs-Objekt (LAC) zur Verarbeitung einer der jeweiligen Kommunikationsverbindung entsprechenden Signalisierungsnachricht sowie ein einrichtungsinterner Abläufe steuerndes Ruf-/Dienstesteuerungsobjekt (CSC) umfassen,
**dadurch gekennzeichnet,**
daß die Steuermittel bei Vorliegen eines Mehrfachverbindungsrufs zum Aufbau einer Mehrzahl von Nutzverbindungen zwischen zwei Teilnehmern des Kommunikationsnetzes auf derjenigen Teilnehmerseite der beiden Teilnehmer, von der ein Anreiz zum Aufbau einer Nutzverbindung vorliegt, ein Leitungs-Zugriffssteuerungs-Objekt (LACA), ein Ruf-/Dienstesteuerungsobjekt (CSCA) und ein Nutzverbindungssteuerungsobjekt (COC), welches den Auf- und Abbau der entsprechenden Nutzverbindung steuert, aufbauen, während die Steuermittel auf der anderen Teilnehmerseite lediglich ein Leitungs-Zugriffssteuerungsobjekt (LACB) und eine Ruf/Dienstesteuerungsobjekt (CSC) aufbauen.

2. Vermittlungseinrichtung nach Anspruch 1,
**dadurch gekennzeichnet,**
daß die Steuermittel zum Aufbau einer Kommunikationsverbindung sowohl auf der rufenden Teilnehmerseite als auch auf der gerufenen Teilnehmerseite jeweils ein Transportsteuerungsobjekt (TRC) aufbauen, welches Zustandsänderungen der Datensicherungsschicht des OSI-Schichtenmodells bearbeitet.

3. Vermittlungseinrichtung nach Anspruch 1 oder 2,
**dadurch gekennzeichnet,**
daß die Steuermittel als Bindeglied der im Laufe eines vermittlungstechnischen Prozesses aufgebauten Objekte ein Verbindungssteuerungsobjekt (ASC) in Form eines Signalverteilers aufweisen.

4. Vermittlungseinrichtung nach Anspruch 2 und 3,
**dadurch gekennzeichnet,**
daß die nach dem OSI-Schichtenmodell festgelegte Vermittlungsschicht in eine Mehrzahl von Unterschichten unterteilt ist, wobei das Verbindungssteuerungsobjekt (ASC), das Transportsteuerungsobjekt (TRC), das Leitungs-Zugriffssteuerungs-objekt (LAC), das Ruf-/Dienste-Steuerungsobjekt (CSC) und das Nutzverbindungssteuerungsobjekt (COC) jeweils einer der Unterschichten zugeordnet ist.

5. Vermittlungseinrichtung nach einem der vorhergehenden Ansprüche,
**dadurch gekennzeichnet,**
daß die Steuermittel die einzelnen Nutzverbindungen des Mehrfachverbindungsrufs sowie die entsprechenden Objekte (LAC, CSC, COC) nacheinander jeweils abhängig vom Vorliegen eines Anreizes einer der beiden Teilnehmer aufbauen, wobei die Steuermittel eine neue Nutzverbindung des Mehrfachverbindungsrufs und entsprechende Objekte nur aufbauen, falls der Aufbau der vorhergehenden Nutzverbindung des Mehrfachverbindungsrufs abgeschlossen ist.

6. Vermittlungseinrichtung nach einem der vorhergehenden Ansprüche,
**dadurch gekennzeichnet,**
daß die Steuermittel bei Vorliegen eines Mehrfachverbindungsrufs die Mehrzahl von Nutzverbindungen für unterschiedliche zu übermittelnde Informationsarten, wie z.B. Sprach-, Bild- oder Dateninformationen, aufbauen.

7. Vermittlungseinrichtung nach einem der vorhergehenden Ansprüche,
**dadurch gekennzeichnet,**
daß die Steuermittel bei Vorliegen eines Mehrfachverbindungsrufs ein Verwaltungsobjekt (MMAN) instanziieren, welches den Zusammenhang zwischen dem Mehrfachverbindungsruf und den für den Mehrfachverbindungsruf aufgebauten Nutzverbindungen verwaltet.

8. Vermittlungseinrichtung nach Anspruch 7,
**dadurch gekennzeichnet,**
daß die Steuermittel das Vorliegen eines Mehrfachverbindungsrufs durch Auswerten einer den Mehrfachverbindungsruf bezeichnenden Initialruf erkennen und bei Abbau des Initialrufs automatisch alle zu dem entsprechenden Mehrfachverbindungsruf gehörende Nutzverbindungen abbauen.

9. Vermittlungseinrichtung nach den Ansprüchen 3, 7 und 8,
**dadurch gekennzeichnet,**
daß das Verbindungssteuerungsobjekt (ASC) das Vorliegen des Initialrufs erkennt und mindestens ein Leitungs-Zugriffssteuerungsobjekt (LAC-M) instanziiert, welches lediglich die nachfolgenden Rufnachrichten verarbeitet, und
daß ein weiteres Leitungs-Zugriffssteuerungsobjekt (LAC) vorgesehen ist, welches dem Initialruf zugeordnet ist und beim Auslösen des Initialrufs anhand der Informationen des Verwaltungsobjekts (MMAN) die für den entsprechenden Mehrfachverbindungsruf vorhandenen weiteren Leitungs-Zugriffssteuerungs-Objekte (LAC-M) auslöst, um die entsprechenden Nutzverbindungen abzubauen.

10. Vermittlungseinrichtung nach Anspruch 7,
**dadurch gekennzeichnet,**
daß das Verwaltungsobjekt (MMAN) die Zugehörigkeit der einzelnen Nutzverbindungen zu einem Mehrfachverbindungsruf mit Hilfe eines jeder Nutzverbindung zugewiesenen Informationselements definiert, wobei das Informationselement die entsprechende Nutzverbindung als zu einem bestimmten Mehrfachverbindungsruf gehörig bezeichnet.

11. Vermittlungseinrichtung nach Anspruch 10,
**dadurch gekennzeichnet,**
daß die Steuermittel das Vorliegen eines Mehrfachverbindungsrufs durch Auswerten eines Initialrufs erkennen, wobei die Steuermittel bei Abbau des Initialrufs automatisch anhand der von dem Verwaltungsobjekt (MMAN) verwalteten Informationen automatisch alle zu dem entsprechenden Mehrfachverbindungsruf gehörenden Nutzverbindungen abbauen.

12. Vermittlungseinrichtung nach Anspruch 11,
**dadurch gekennzeichnet,**
daß ein Leitungs-Zugriffssteuerungsobjekt (LAC) vorgesehen ist, welches für den Initialruf zuständig ist und bei Auslösen des Initialrufs anhand der von dem Verwaltungsobjekt (MMAN) verwalteten Informationen weitere zu dem entsprechenden Mehrfachverbindungsruf gehörende Leitungs-Zugriffssteuerungsobjekte (LAC) ermittelt und auslöst, um die entsprechenden Nutzverbindungen des Mehrfachverbindungsrufs abzubauen.

13. Vermittlungseinrichtung nach einem der Ansprüche 1 - 6,
**dadurch gekennzeichnet,**
daß die Vermittlungseinrichtung derart ausgestaltet ist, daß sie bei Vorliegen eines Mehrfachverbindungsrufs ein die Zugehörigkeit der einzelnen Nutzverbindungen zu dem Mehrfachverbindungsruf anzeigendes Informationselement von der rufenden Teilnehmerseite zu der gerufenen Teilnehmerseite übermittelt.

14. Verwendung einer Vermittlungseinrichtung nach einem der vorhergehenden Ansprüche in einem ATM-Breitband-Kommunikationsnetz.
